# EUROPEAN PATENT SPECIFICATION

(11) **EP 3 770 212 B1**
(45) Date of publication and mention of the grant of the patent: **13.09.2023**
(21) Application number: 19772451.1
(22) Date of filing: 20.03.2019
(51) Int. Cl.: C08L 23/20, C08L 23/16

(54) **BUTENE-BASED POLYMER COMPOSITION**
POLYMERZUSAMMENSETZUNG AUF BUTENBASIS
COMPOSITION POLYMÈRE À BASE DE BUTÈNE

(30) Priority: 22.03.2018 JP 2018054528
(43) Date of publication of application: 27.01.2021
(73) Proprietor: Mitsui Chemicals, Inc., Tokyo 104-0028 (JP)
(72) Inventor: TOKUI, Shin, Ichihara-shi, Chiba 299-0108 (JP); KIMURA, Tsuyoshi, Ichihara-shi, Chiba 299-0108 (JP); TSUCHIDA, Shinji, Ichihara-shi, Chiba 299-0108 (JP)
(74) Representative: Hoffmann Eitle
(86) International application number: PCT/JP2019/011651
(87) International publication number: WO 2019/182000

(56) References cited:
- JP-A- 2006 169 306
- JP-A- 2006 265 442
- JP-A- 2014 200 949

## Description

### Technical Field

The present invention relates to a butene-based polymer composition.

### Background Art

Poly-1-butene resins are excellent in creep characteristics at high temperature, wear resistance, flexibility, compatibility with polypropylene, and the like and therefore used for water and hot water supply pipes, sheets such as skin materials, and the modification of polypropylene resins.

For example, Patent Literature 1 describes a poly-1-butene resin composition comprising 50 to 99.9 parts by weight of a poly-1-butene resin (A), 1 to 40 parts by weight of syndiotactic polypropylene (B), and 50 to 0.1 parts by weight of a syndiotactic propylene/α-olefin copolymer (B) (the total of (A), (B), and (C) is 100 parts by weight). It is described that this poly-1-butene resin composition is excellent in the balance of flexibility, tensile elongation at low temperature, and scratch resistance. As specific modes, a poly-1-butene resin composition comprising 90% by weight of a poly-1-butene resin (A), 2% by weight of syndiotactic polypropylene (B), and 8% by weight of a propylene/ethylene copolymer (B), for example, is disclosed.

In addition, Patent Literature 2 describes a poly-1-butene-based resin composition comprising a poly-1-butene resin (A), isotactic polypropylene (B), and a propylene/ethylene/α-olefin random copolymer (C), wherein (A) is 80 to 99.9 parts by weight, and the total of (B) and (C) is 0.1 to 20 parts by weight, based on 100 parts by weight of the total of (A), (B), and (C), and (B)/(C) (weight ratio) is in the range of 1/99 to 40/60. It is described that this poly-1-butene-based resin composition is excellent in the balance between flexibility and thermal creep resistance and therefore excellent in workability, and preferably used for water and hot water supply pipes and pipe joints excellent in strength. As a specific mode, a poly-1-butene-based resin composition comprising 93.75% by weight of a poly-1-butene resin (A), 1.25% by weight of isotactic polypropylene (B), and 5% by mass of a propylene/ethylene/1-butene copolymer (C) is disclosed.

### Citation List

### Patent Literature

Patent Literature 1: JP-A 2006-169306
Patent Literature 2: JP-A 2006-265442

### Summary of Invention

### Technical Problem

However, although the conventional poly-1-butene resin compositions are excellent in tensile creep characteristics, they are poor in stretchability, and therefore there is room for further improvement in terms of processability.

In view of such a problem in the conventional art, it is an object of the present invention to provide a butene-based polymer composition excellent in tensile creep characteristics and uniform deformability in a balanced manner, and a shaped body excellent in these characteristics comprising a butene-based polymer.

### Solution to Problem

The gist of the present invention is as follows.
[1] A butene-based polymer composition comprising:
   96.0 to 99.5 parts by mass of a butene-based polymer (A) comprising 70 to 100 mol % of a constituent unit derived from 1-butene, and 0 to 30 mol % of a constituent unit derived from an α-olefin having 2 to 10 carbon atoms other than 1-butene, and having a melt flow rate (in accordance with ASTM D1238, 190°C, a load of 2.16 kg) of 0.01 to 50 g/10 min; and
   0.5 to 4.0 parts by mass of a propylene/ethylene/α-olefin random copolymer (B) comprising 45 to 89 mol % of a constituent unit derived from propylene, 1 to 25 mol % of a constituent unit derived from ethylene, and optionally 0 to 30 mol % of a constituent unit (a) derived from an α-olefin having 4 to 20 carbon atoms (provided that a total amount of the butene-based polymer (A) and the propylene/ethylene/α-olefin random copolymer (B) is 100 parts by mass),
   wherein a primary differential value of stress (d (stress)/d (strain)) is always a positive value in a strain range of 1.0 or less in a stress-strain curve obtained by performing a tensile test at 23°C under conditions of a grip-to-grip distance of 30 mm and a tensile rate of 50 mm/min on a 15 mm wide and 0.5 mm thick pressed sheet comprising the butene-based polymer composition.

### Advantageous Effect of Invention

The butene-based polymer composition and shaped body of the present invention are excellent in tensile creep characteristics and uniform deformability in a balanced manner.

### Description of Embodiments

The present invention will be described in more detail below.

### [Butene-Based Polymer Composition]

A butene-based polymer composition according to the present invention comprises 96.0 to 99.5 parts by mass of a butene-based polymer (A) and 0.5 to 4.0 parts by mass of a propylene/ethylene/α-olefin random copolymer (B), and always has a positive value of the primary differential value of stress (d (stress)/d (strain)) in the strain range of 1.0 or less in a stress-strain curve obtained by performing a predetermined tensile test.

### <<Butene-Based Polymer (A)>>

The butene-based polymer (A) is a homopolymer of 1-butene or a 1-butene/α-olefin copolymer comprising 70 to 100 mol % of a constituent unit derived from 1-butene, and 0 to 30 mol % of a constituent unit derived from an α-olefin having 2 to 10 carbon atoms other than 1-butene, provided that the total amount of the constituent units in the butene-based polymer (A) is 100 mol %.

Specific examples of the α-olefin having 2 to 10 carbon atoms other than 1-butene include ethylene, propylene, 1-pentene, 4-methyl-1-pentene, 1-hexene, 1-heptene, 1-octene, 1-nonene, and 1-decene. One of these α-olefins is used alone, or two or more of these α-olefins are used in combination.

The content of the constituent unit derived from the α-olefin in the 1-butene/α-olefin copolymer is 30 mol % or less, preferably 20 mol % or less, and the content of the constituent unit derived from 1-butene is 70 mol % or more, preferably 80 mol % or more.

The melt flow rate (measured at 190°C and a load of 2.16 kg in accordance with ASTM D1238) of the butene-based polymer (A) is 0.01 to 50 g/10 min, preferably 0.1 to 30 g/10 min, and further preferably 0.2 to 20 g/10 min.

In addition, the Mw/Mn of the butene-based polymer (A) measured by the GPC method under conditions described later is not particularly limited and is usually 1.5 or more, preferably 2 or more, and further preferably 3 or more. Its upper limit value may be, for example, about 20.

The butene-based polymer (A) can be produced by a conventionally known production method, for example, polymerizing only 1-butene, or copolymerizing 1-butene and an α-olefin other than 1-butene in the desired proportion, in the presence of a Ziegler Natta catalyst or a metallocene-based catalyst.

The butene-based polymer (A) may be a mixture of two or more butene-based polymers. Preferred examples of such a mixture include the butene-based polymer (A) comprising 60 to 95% by mass of a butene-based polymer (a1) having a melt flow rate is 0.01 to 5 g/10 min, a molecular weight distribution (Mw/Mn) obtained by the GPC method of 6 or less, and an isotactic index (mmmm) of 90% or more, and 5 to 40% by mass of a butene-based polymer (a2) having a melt flow rate of 20 times or more the melt flow rate of the butene-based polymer (a1), a molecular weight distribution (Mw/Mn) obtained by the GPC method of 6 or less, and an isotactic index (mmmm) of 90% or more, provided that the total of (a1) and (a2) is 100% by mass.

The butene-based polymer (a1) is a 1-butene homopolymer or a 1-butene/α-olefin copolymer of 1-butene and an α-olefin having 2 to 10 carbon atoms other than 1-butene, having a content of a constituent unit derived from 1-butene and 70 to 100 mol %, and its melt flow rate is preferably 0.01 to 2 g/10 min, more preferably 0.1 to 1 g/10 min.

In addition, the ratio of weight average molecular weight (Mw) to number average molecular weight (Mn) (Mw/Mn), representing molecular weight distribution, of the butene-based polymer (a1) is 6 or less, and preferably 5 or less in terms of excellent impact resistance of the butene-based polymer composition. The value of this Mw/Mn is a value measured by the following method.

### [Measurement Method]

(i) Standard polystyrenes (monodisperse polystyrenes, manufactured by Tosoh Corporation) whose molecular weight are known are used, and polystyrenes having different molecular weights are subjected to GPC (gel permeation chromatography) analysis under the following conditions to prepare a calibration curve of molecular weight M and EV values (Elution volume).

### <Measurement Conditions>

Apparatus: manufactured by Waters Corporation, model ALC/GPC150-C
Columns: manufactured by Tosoh Corporation, TSK_{gel} GMHHR-H(S)HT × 2 + TSK_{gel} GMH6-HTL × 1
(7.8 mm ϕ × 300 mm and 7.5 mm ϕ × 600 mm respectively)
Temperature: 140°C
Flow rate: 1 ml/min

### (ii) Preparation of Sample

A polymer to be measured and a solvent (o-dichlorobenzene) are placed in a flask to prepare a solution in a ratio of 20 ml of the solvent to 30 mg of the polymer.

2,6-Di-t-butylcresol as a stabilizer is added to the obtained polymer solution to a stabilizer concentration of 0.1% by weight. This solution is stirred at 145°C for 1 h to completely dissolve the polymer and the stabilizer. Next, the solution is filtered through a 0.45 um filter at a temperature of 145°C. The obtained filtrate is subjected to GPC analysis under the same measurement conditions as the above (i). From the found EV value, the number average molecular weight (Mn = ΣMi²Ni/ΣNi) and the weight average molecular weight (Mw = ΣMi²Ni/ΣMiNi) are obtained by the calibration curve prepared in the (i), and Mw/Mn is calculated.

In addition, the isotactic index (mmmm) of the butene-based polymer (a1) measured by the NMR method is 90% or more, preferably 92% or more.

The butene-based polymer (a2) is a 1-butene homopolymer or a 1-butene/α-olefin copolymer of 1-butene and an α-olefin having 2 to 10 carbon atoms other than 1-butene, like the butene-based polymer (a1).

The melt flow rate of the butene-based polymer (a2) is 20 times or more, preferably 50 to 1000 times, the melt flow rate of the butene-based polymer (a1).

In addition, in the butene-based polymer (a2), the molecular weight distribution (Mw/Mn) obtained by the GPC method is 6 or less, and preferably 5 or less in terms of excellent impact resistance of the butene-based polymer composition.

Further, the isotactic index (mmmm) of the butene-based polymer (a2) measured by the NMR method is 90% or more, preferably 92% or more.

The butene-based polymer composition comprising the butene-based polymer (A) comprising the butene-based polymer (a1) and the butene-based polymer (a2) has good forming processability because the melt tension of a molten parison is high. In addition, in terms of obtaining a shaped article excellent in impact resistance, the blending ratio of the butene-based polymer (a1) to the butene-based polymer (a2) is 60/40 to 95/5, preferably 90/10 to 70/30, in terms of mass ratio [(a1)/(a2)].

An example of the production of this butene-based polymer (A) comprising the butene-based polymer (a1) and the butene-based polymer (a2) is described in Patent Literature JP-A H05-9352.

In addition, other preferred examples of the butene-based polymers (A) used in the present invention include a butene-based polymer which comprises 70 to 100 mol % of a constituent unit derived from 1-butene, and 0 to 30 mol % of a constituent unit derived from an α-olefin having 2 to 10 carbon atoms (excluding 1-butene) and has an isotactic index (mmmm) measured by the NMR method of 90% or more, a molecular weight distribution (Mw/Mn) obtained by the GPC method of 3 or more, and a residual catalyst content of 50 ppm by mass or less in terms of titanium. Such a butene-based polymer and a method for producing the same are described in European Patent No. 0980396.

### <<Propylene/Ethylene/α-Olefin Random Copolymer (B)>>

The propylene/ethylene/α-olefin random copolymer (B) (hereinafter also simply described as a "copolymer (B)") comprises 45 to 89 mol %, preferably 45 to 80 mol %, and more preferably 50 to 75 mol %, of a constituent unit derived from propylene, 1 to 25 mol %, preferably 5 to 23 mol %, and more preferably 10 to 20 mol %, of a constituent unit derived from ethylene, and optionally 0 to 30 mol %, preferably 0 to 25 mol %, and more preferably 0 to 20 mol %, of a constituent unit (a) derived from an α-olefin having 4 to 20 carbon atoms.

When an α-olefin having 4 to 20 carbon atoms is essential, the copolymer (B) comprises 45 to 89 mol %, preferably 45 to 80 mol %, and more preferably 50 to 75 mol %, of a constituent unit derived from propylene, 1 to 25 mol %, preferably 5 to 23 mol %, and more preferably 10 to 20 mol %, of a constituent unit derived from ethylene, and 1 to 30 mol %, preferably 2 to 25 mol %, and more preferably 3 to 20 mol %, of a constituent unit (a) derived from an α-olefin having 4 to 20 carbon atoms.

Examples of the α-olefin having 4 to 20 carbon atoms include 1-butene, 1-pentene, 4-methyl-1-pentene, 1-hexene, 1-heptene, 1-octene, 1-nonene, and 1-decene. Among these, 1-butene, 1-hexene, and 1-octene are preferred, and 1-butene is particularly preferred. One of these α-olefins is used alone, or two or more of these α-olefins are used in combination.

It is desired that the copolymer (B) usually has an intrinsic viscosity [η] measured in decalin at 135°C of 0.01 to 10 dl/g, preferably 0.05 to 10 dl/g. The copolymer (B) is excellent in characteristics such as weather resistance, ozone resistance, heat aging resistance, low temperature characteristics, and dynamic fatigue resistance when the intrinsic viscosity [η] is within the range.

The copolymer (B) usually has a crystallinity measured by X-ray diffraction of 20% or less, preferably 0 to 15%. It is also desired that the copolymer (B) have a single glass transition temperature, and that the glass transition temperature Tg measured by a differential scanning calorimeter (DSC) is usually in the range of -10°C or less, preferably -15°C or less. The copolymer (B) is excellent in cold resistance and low temperature characteristics when the glass transition temperature Tg is within the range.

In addition, the molecular weight distribution (Mw/Mn, in terms of polystyrene, Mw: weight average molecular weight, Mn: number average molecular weight) of the copolymer (B) measured by GPC under the above-described conditions is not particularly limited but is usually 4.0 or less, preferably 3.0 or less, and more preferably 2.5 or less.

The copolymer (B) may be partially graft-modified with a polar monomer. Examples of this polar monomer include hydroxyl group-containing ethylenic unsaturated compounds, amino group-containing ethylenic unsaturated compounds, epoxy group-containing ethylenic unsaturated compounds, aromatic vinyl compounds, unsaturated carboxylic acids or derivatives thereof, vinyl ester compounds, and vinyl chloride. The amount of modification (the amount of the polar monomer grafted) is usually 0.1 to 50% by mass, preferably 0.2 to 30% by mass, and more preferably 0.2 to 10% by mass based on 100 parts by mass of the copolymer (B). The graft modification can be performed, for example, by the method described in [0044] to [0048] in Patent Literature JP-A 2006-265442.

The copolymer (B) can be produced, for example, by the method described in [0051] in Patent Literature JP-A 2006-265442.

### <<Optional Components>>

The butene-based polymer composition according to the present invention may contain additives such as a propylene-based polymer (C), a nucleating agent, a heat-resistant stabilizer, a weather-resistant stabilizer, an antistatic agent, a fungicide, a rusting inhibitor, a lubricant, a filler, a pigment, an antiblocking agent, a slip inhibitor, and an antifogging agent, as needed, as long as the additives do not impair the object of the present invention.

Examples of the propylene-based polymer (C) include a propylene homopolymer (c1) and a random copolymer (c2) of propylene and an α-olefin having 2 to 20 carbon atoms (excluding propylene).

The propylene-based polymer (C) usually has a melt flow rate (in accordance with ASTM D1238, 230°C, a load of 2.16 kg) of 0.1 to 400 g/10 min, preferably 0.5 to 90 g/10 min.

The melting point of the propylene-based polymer (C) measured by the following method is usually 120°C or more, preferably 130°C or more, and more preferably 150°C or more, and its upper limit may be, for example, 170°C.

### <Measurement Method>

A sample is heated, maintained at 200°C for 10 min, then cooled to -20°C at a cooling rate of 10°C/min, maintained at -20°C for 1 min, and then heated at a heating rate of 10°C/min by a differential scanning calorimetry apparatus. The temperature that gives a melting peak in the DSC curve obtained in the second heating is taken as the melting point.

Examples of the α-olefin in the random copolymer (c2) include ethylene, 1-butene, 1-pentene, 3-methyl-1-butene, 1-hexene, 4-methyl-1-pentene, 1-octene, and 1-decene. Among these, ethylene, 1-butene, and 1-hexene are preferred. The proportion of the constituent unit derived from the α-olefin in all constituent units in the random copolymer (c2) is 7 mol % or less, preferably 0.3 to 6 mol %, and further preferably 0.3 to 5 mol %.

Examples of the nucleating agent include polyethylene wax, polypropylene wax, polyethylene, polypropylene, polystyrene, nylon (polyamide), polycaprolactone, talc, titanium oxide, 1,8-naphthalimide, phthalimide, alizarin, quinizarin, 1,5-dihydroxy-9,10-anthraquinone, quinalizarin, sodium 2-anthraquinonesulfonate, 2-methyl-9,10-anthraquinone, anthrone, 9-methylanthracene, anthracene, 9,10-dihydroanthracene, 1,4-naphthoquinone, 1,1-dinaphthyl, stearic acid, calcium stearate, sodium stearate, potassium stearate, zinc oxide, hydroquinone, anthranilic acid, ethylenebisstearylamide, sorbitol derivatives, the polycarboxylic acid-based amide compounds, polyamine-based amide compounds, and polyamino acid-based amide compounds described in Patent Literature JP-A H08-48838, and the vinylcycloalkane polymers described in Patent Literature JP-B H05-58019.

One of these nucleating agents may be used alone, or two or more of these nucleating agents may be used in combination.

### (Butene-Based Polymer Composition)

The butene-based polymer composition according to the present invention comprises 96.0 to 99.5 parts by mass of the butene-based polymer (A) and 0.5 to 4.0 parts by mass of the propylene/ethylene/α-olefin random copolymer (B).

The content of the butene-based polymer (A) in the butene-based polymer composition is preferably 96.0 to 99.0 parts by mass, more preferably 96.0 to 98.5 parts by mass, and the content of the propylene/ethylene/α-olefin random copolymer (B) is preferably 1.0 to 4.0 parts by mass, more preferably 1.5 to 4.0 parts by mass, provided that the total amount of the butene-based polymer (A) and the copolymer (B) is 100 parts by mass.

Since the propylene/ethylene/α-olefin random copolymer (B) is blended at the content of the above described lower limit value or more, the butene-based polymer composition of the present invention does not have a yield point described later and is excellent in uniform deformability.

In addition, since the propylene/ethylene/α-olefin random copolymer (B) is blended at the content of the above described upper limit value or less, the butene-based polymer composition of the present invention is excellent in tensile creep characteristics.

When the composition of the present invention contains the propylene-based polymer (C), the amount of the propylene-based polymer (C) is preferably 1 to 45 parts by mass, more preferably 1 to 30 parts by mass, based on 100 parts by mass of the propylene/ethylene/α-olefin random copolymer (B).

The butene-based polymer composition according to the present invention can be produced, for example, by melting and kneading the butene-based polymer (A), the propylene/ethylene/α-olefin random copolymer (B), and the optional components as needed.

For the kneading, a kneading apparatus, for example, a single-screw extruder, a twin-screw extruder, a twin-screw kneader, or a Banbury mixer can be used.

When the propylene-based polymer (C) is used, the propylene/ethylene/α-olefin random copolymer (B) is preferably mixed with the propylene-based polymer (C) and then mixed with the butene-based polymer (A), in view of producing a butene-based polymer composition excellent in tensile creep characteristics and uniform deformability.

When a tensile test is performed under the conditions of a grip-to-grip distance of 30 mm and a tensile rate of 50 mm/min on a 15 mm wide and 0.5 mm thick strip-shaped test piece fabricated by press forming from the butene-based polymer composition of the present invention under the conditions of 190°C × 5 min, there is no yield point in the strain range of 1.0 or less. "There is no yield point (having no yield point)" means that the primary differential value of stress (d (stress (MPa))/d (strain)) is always a positive value in the strain range of 1.0 or less in a stress-strain curve.

Polybutene resins easily undergo stress in two axial directions due to strain constraint. When polybutene resins undergo such stress, a yield phenomenon, which hinders uniform deformation, appears easily.

In a tensile test, a test piece having a shape in which the cross-sectional area of the portions to be fixed to fixtures is larger than that of a central portion, that is, having a dumbbell shape, is usually used in order to prevent rupture in the fixed portions. The present inventors have confirmed that when a test piece formed from only the butene-based polymer (A) is subjected to a tensile test, no yield point occurs in the strain range of 1.0 or less when the test piece shape is a usual dumbbell shape, which easily undergoes stress in one axial direction, but a yield point occurs in the strain range of 1.0 or less when the test piece shape is a strip shape, which easily undergoes stress in two axial directions.

The present inventors have found that although a yield point occurs for a test piece having a strip shape formed from only the butene-based polymer (A), as described above, a test piece obtained by blending a small amount of the copolymer (B) into the butene-based polymer (A) does not rupture and has no yield point in the strain range of 1.0 or less in a tensile test, even if the test piece has a strip shape.

Therefore, the butene-based polymer composition according to the present invention is excellent in uniform deformability.

Further, as the minimum value of the above-described primary differential value of stress is larger, the stress-strain curve steepens in the strain range of 1.0 or less, and the uniform deformability of the butene-based polymer composition according to the present invention is even better. Therefore, in the strain range of 1.0 or less in a stress-strain curve obtained by performing a tensile test under the above-described conditions, the minimum value of the primary differential value of stress (d (stress (MPa))/d (strain)) is preferably 0.90 or more, more preferably 0.95 or more, further preferably 1.00 or more, and particularly preferably 1.20 or more. Its upper limit value is not particularly limited and may be, for example, 500.

### [Shaped Body]

A shaped body according to the present invention comprises the butene-based polymer composition according to the present invention described above, and can be produced by shaping the butene-based polymer composition by an ordinary method.

The shaped body according to the present invention is excellent in tensile creep characteristics and uniform deformability.

The shaped body according to the present invention can be applied to the conventional applications of shaped bodies comprising butene-based polymer compositions.

### Examples

The present invention will be described below by Examples, but the present invention is not limited in any way by these Examples.

### <Evaluation Methods>

### [Tensile Test]

A butene-based polymer composition or a butene-based polymer produced in an Example or the like was pressed under the conditions of 190°C × 5 min to fabricate a 15 mm wide and 0.5 mm thick strip-shaped test piece. For this test piece, a tensile test was performed under the conditions of a grip-to-grip distance of 30 mm and a tensile rate of 50 mm/min using a tensile testing machine (Universal Testing Machine Model 55R1122 manufactured by Instron).

When the primary differential value of stress (d (stress (MPa))/d (strain)) was always a positive value in the strain range of 1.0 or less in the obtained stress-strain curve, it was considered that there was no yield point in this range. When there was a case where primary differential value was 0 or less in the strain range of 1.0 or less, it was considered that there was a yield point in this range. In addition, the minimum value of the primary differential value (hereinafter described as the "primary differential minimum value") in the strain range of 1.0 or less was recorded.

### [Tensile Creep Characteristics]

Tensile creep strain was measured under the following conditions in accordance with JIS K7115.
Test piece: ASTM IV
Initial stress: 6.0 MPa
Temperature: 95°C
Time: 100 h

### <Production of Butene-Based Polymer Compositions and the Like>

The details of the resins used in the Examples and the like are as follows.
• Butene-based polymer (A1):
   1-butene homopolymer (MFR (190°C): 0.5 g/10 min, density: 920 kg/m³, [η]: 2.4 dl/g, Mw/Mn: 5.8, mmmm: 93.0%, melting point: 128°C)
· Propylene/ethylene/1-butene random copolymer (B1):
   a propylene/ethylene/1-butene random copolymer produced according to [Synthesis Example 1] in Patent Literature JP-A 2006-265442 except that the proportion of the raw material monomers is changed (constituent unit derived from ethylene: 9 mol %, constituent unit derived from propylene: 72 mol %, constituent unit derived from 1-butene: 19 mol %, [η]: 1.8 dl/g, glass transition temperature: -29°C, Mw/Mn: 2.1, melting point: 40°C)
• Propylene homopolymer (C1):
   propylene polymer (MFR (230°C, a load of 2.16 kg): 7 g/10 min, melting point: 160°C)

### [Comparative Example 1]

The evaluation results of the butene-based polymer (A1) are shown in Table 1.

### [Example 1]

2.33 Parts by mass of the propylene/ethylene/1-butene random copolymer (B1) and 0.12 parts by mass of the propylene homopolymer (C1) were melted and kneaded at 200°C by a twin-screw extruder to obtain a mixture. Then, the obtained mixture and 97.67 parts by mass of the butene-based polymer (A1) were melted and kneaded by a 40 mm ϕ single-screw extruder to obtain a butene-based polymer composition. The evaluation results of the butene-based polymer composition are shown in Table 1.

### [Example 2 and Comparative Examples 2 to 3]

The same operation as Example 1 was performed except that the ratio of the components was changed as described in Table 1, thereby obtaining butene-based polymer compositions. The evaluation results of the butene-based polymer compositions are shown in Table 1.

**Table 1**

| | | Comparative Example 1 | Example 1 | Example 2* | Comparative Example 2 | Comparative Example 3 |
|---|---|---|---|---|---|---|
| Blending amount (parts by mass) | | | | | | |
| | Butene-based polymer (A1) | 100 | 97.67 | 95.34 | 94.18 | 90.69 |
| | Propylene/ethylene/1-butene random copolymer (B1) | - | 2.33 | 4.66 | 5.82 | 9.31 |
| | Propylene homopolymer (C1) | - | 0.12 | 0.25 | 0.31 | 0.49 |

| Properties | | | | | | |
|---|---|---|---|---|---|---|
| | Yield point | Present | Absent | Absent | Absent | Absent |
| | Primary differential minimum value | -1.40 | 1.34 | 0.97 | 0.89 | 0.67 |
| | Tensile creep strain (%) | 8 | 9 | 11 | 13 | 16 |

| | | | | | | |
|---|---|---|---|---|---|---|
| *Reference Example | | | | | | |

## Claims

1. A butene-based polymer composition comprising:
96.0 to 99.5 parts by mass of a butene-based polymer (A) comprising 70 to 100 mol % of a constituent unit derived from 1-butene, and 0 to 30 mol % of a constituent unit derived from an α-olefin having 2 to 10 carbon atoms other than 1-butene, and having a melt flow rate (in accordance with ASTM D1238, 190°C, a load of 2.16 kg) of 0.01 to 50 g/10 min; and
0.5 to 4.0 parts by mass of a propylene/ethylene/α-olefin random copolymer (B) comprising 45 to 89 mol % of a constituent unit derived from propylene, 1 to 25 mol % of a constituent unit derived from ethylene, and optionally 0 to 30 mol % of a constituent unit (a) derived from an α-olefin having 4 to 20 carbon atoms, provided that a total amount of the butene-based polymer (A) and the propylene/ethylene/α-olefin random copolymer (B) is 100 parts by mass,
wherein a primary differential value of stress (d (stress)/d (strain)) is always a positive value in a strain range of 1.0 or less in a stress-strain curve obtained by performing a tensile test at 23°C under conditions of a grip-to-grip distance of 30 mm and a tensile rate of 50 mm/min on a 15 mm wide and 0.5 mm thick pressed sheet comprising the butene-based polymer composition.

2. The butene-based polymer composition according to claim 1, comprising 96.0 to 99.0 parts by mass of the butene-based polymer (A).

3. The butene-based polymer composition according to claim 1 or 2, wherein the primary differential value of stress (d (stress)/d (strain)) is 0.90 or more.

## Patentansprüche

1. Polymerzusammensetzung auf Butenbasis, umfassend:
96,0 bis 99,5 Masseteile eines Polymers auf Butenbasis (A), umfassend 70 bis 100 Mol-% einer von 1-Buten abgeleiteten Grundeinheit und 0 bis 30 Mol-% einer von einem α-Olefin mit 2 bis 10 Kohlenstoffatomen, das von 1-Buten verschieden ist, abgeleiteten Grundeinheit, und mit einer Schmelzflussrate (gemäß ASTM D1238, 190°C, bei einer Last von 2,16 kg) von 0,01 bis 50 g/10 min; und
0,5 bis 4,0 Masseteile eines statistischen Propylen/Ethylen/α-Olefin-Copolymers (B), umfassend 45 bis 89 Mol-% einer von Propylen abgeleiteten Grundeinheit, 1 bis 25 Mol-% einer von Ethylen abgeleiteten Grundeinheit und optional 0 bis 30 Mol-% einer von einem α-Olefin mit 4 bis 20 Kohlenstoffatomen abgeleiteten Grundeinheit (a), wobei eine Gesamtmenge des Polymers auf Butenbasis (A) und des statistischen Propylen/Ethylen/α-Olefin-Copolymers (B) 100 Masseteile beträgt,
worin ein primärer Differenzwert der Spannung (d (Spannung)/d (Dehnung)) in einem Dehnungsbereich von 1,0 oder weniger in einer Spannungs-Dehnungskurve, die durch Durchführung eines Zugversuchs bei 23°C unter Bedingungen eines Griff-zu-Griff-Abstands von 30 mm und einer Zuggeschwindigkeit von 50 mm/min an einer 15 mm breiten und 0,5 mm dicken gepressten Schicht, die die Polymerzusammensetzung auf Butenbasis umfasst, erhalten wird, immer ein positiver Wert ist.

2. Polymerzusammensetzung auf Butenbasis gemäß Anspruch 1, umfassend 96,0 bis 99,0 Massenteile des Polymers auf Butenbasis (A).

3. Polymerzusammensetzung auf Butenbasis gemäß Anspruch 1 oder 2, worin der primäre Differenzwert der Spannung (d (Spannung)/d (Dehnung)) 0,90 oder mehr beträgt.

## Revendications

1. Composition polymère à base de butène comprenant :
96,0 à 99,5 parties en masse d'un polymère à base de butène (A) comprenant 70 à 100 % en moles d'un motif constitutif dérivé du 1-butène, et 0 à 30 % en moles d'un motif constitutif dérivé d'une α-oléfine présentant 2 à 10 atomes de carbone autres que le 1-butène, et présentant un indice de fluidité à chaud (conformément à l'ASTM D1238, 190 °C, une charge de 2,16 kg) de 0,01 à 50 g/10 min ; et
0,5 à 4,0 parties en masse d'un copolymère aléatoire de propylène/éthylène/α-oléfine (B) comprenant 45 à 89 % en moles d'un motif constitutif dérivé du propylène, 1 à 25 % en moles d'un motif constitutif dérivé de l'éthylène, et facultativement 0 à 30 % en moles d'un motif constitutif (a) dérivé d'une α-oléfine présentant 4 à 20 atomes de carbone, à condition qu'une quantité totale du polymère à base de butène (A) et du copolymère aléatoire de propylène/éthylène/α-oléfine (B) soit de 100 parties en masse,
dans laquelle une valeur différentielle primaire d'une contrainte (d (contrainte)/d (déformation)) est toujours une valeur positive dans une plage de déformation de 1,0 ou moins dans une courbe contrainte-déformation obtenue en effectuant un essai à la traction à 23 °C dans des conditions de distance de point de saisie à point de saisie de 30 mm et un taux de traction de 50 mm/min sur une feuille pressée de 15 mm de largeur et de 0,5 mm d'épaisseur comprenant la composition polymère à base de butène.

2. Composition polymère à base de butène selon la revendication 1, comprenant 96,0 à 99,0 parties en masse du polymère à base de butène (A).

3. Composition polymère à base de butène selon la revendication 1 ou la revendication 2, dans laquelle la valeur différentielle primaire de la contrainte (d (contrainte)/d (déformation)) est de 0,90 ou plus.
